# EUROPÄISCHE PATENTSCHRIFT

(11) **EP 0 613 142 B1**
(45) Veröffentlichungstag und Bekanntmachung des Hinweises auf die Patenterteilung: **27.05.1998**
(21) Anmeldenummer: 94200316.1
(22) Anmeldetag: 09.02.1994
(51) Int. Cl.: G11B 25/06, G11B 33/02, G11B 15/10

(54) **Aufzeichnungs- und/oder Wiedergabegerät mit einem Chassis und daran angebrachten Geräteteilen**
Recording and/or reproducing apparatus with apparatus parts fixed on a chassis
Appareil d'enregistrement et/ou de reproduction avec des parties de l'appareil fixés à un châssis

(30) Priorität: 11.02.1993 AT 249/93
(43) Veröffentlichungstag der Anmeldung: 31.08.1994
(73) Patentinhaber: Philips Electronics N.V., 5621 BA Eindhoven (NL)
(72) Erfinder: Fischer, Karl, NL-5656 AA Eindhoven (NL)
(74) Vertreter: Cuppens, Hubertus Martinus Maria

(56) Entgegenhaltungen:
- EP-A- 0 055 302
- EP-A- 0 346 971
- EP-A- 0 356 985

## Beschreibung

Die Erfindung bezieht sich auf ein Aufzeichnungs- und/oder Wiedergabegerät mit einem Gerätegehäuse, mit einem innerhalb des Gerätegehäuses untergebrachten Chassis, mit an dem Chassis angebrachten Geräteteilen, von denen zumindest ein Geräteteil am Chassis verstellbar gehalten ist, und mit mindestens einer zum Steuern des Verstellens von mindestens einem am Chassis verstellbar gehaltenen Geräteteil vorgesehenen, zwischen mindestens zwei Betriebslagen gegenüber dem Chassis und den daran angebrachten Geräteteilen verstellbaren Steuereinrichtung, die um eine Achse verschwenkbar gelagert ist und die über eine Koppelungseinrichtung mit einer verstellbaren Betätigungseinrichtung gekoppelt ist, die in einer vorgegebenen Relativlage zum Chassis und den daran angebrachten Geräteteilen über die Koppelungseinrichtung mit der Steuereinrichtung koppelbar ist und die mit einer zumindest teilweise außerhalb des Gerätegehäuses befindlichen, von Hand aus betätigbaren Handhabe des Gerätes verbunden ist, wobei die Koppelungseinrichtung an der Steuereinrichtung und an der Betätigungseinrichtung je ein Koppelungselement aufweist.

Ein solches Gerät gemäß der im vorstehenden ersten Absatz angeführten Gattung ist beispielsweise aus der AT 390.153 B bekannt. Bei diesem bekannten Gerät handelt es sich um ein beim Betrieb in der Hand haltbares, ein schmales, flaches, quaderförmiges Gerätegehäuse aufweisendes Taschendiktiergerät, in das eine ein Magnetband enthaltende Kassette einsetzbar ist, die zwei zum Aufwickeln des Magnetbandes vorgesehene, rotierend antreibbare Wickelkerne enthält, von denen einer ein Vorlauf-Wickelkern und der andere ein Rücklauf-Wickelkern ist. Bei diesem bekannten Gerät ist an einem Chassis desselben ein verschwenkbar gehaltener Lagerbock vorgesehen, an dem eine Antriebswelle und ein auf die Antriebswelle koaxial und drehfest aufgesetztes Zahnrad drehbar gelagert sind. Die Antriebswelle weist einen Reibrad-Antriebsbereich auf, der zum Antreiben eines am Chassis drehbar gelagerten Vorlauf-Wickeldornrades dient, mit dem ein Vorlauf-Wickeldorn koaxial verbunden ist, der mit dem Vorlauf-Wickelkern in einer Kassette in Antriebsverbindung bringbar ist. Das auf die Antriebswelle koaxial und drehfest aufgesetzte Zahnrad dient zum Antreiben eines am Chassis drehbar gelagerten Rücklauf-Wickeldornrades, mit dem ein Rücklauf-Wickeldorn koaxial verbunden ist, der mit dem Rücklauf- Wickelkern in einer Kassette in Antriebsverbindung bringbar ist. Zum Steuern des Verstellens des Lagerbockes samt der Antriebswelle und dem darauf aufgesetzten Zahnrad weist das bekannte Gerät als Steuereinrichtung einen um eine Achse am Chassis verschwenkbar gelagerten, unter Federbelastung stehenden zweiarmigen Steuerhebel auf, an dessen einem Hebelarm der Lagerbock angelenkt ist. Das freie Ende des anderen Hebelarmes des Steuerhebels bildet ein Koppelungselement einer Koppelungseinrichtung, über die der Steuerhebel mit einer Betätigungseinrichtung gekoppelt ist. Die Betätigungseinrichtung ist hierbei durch einen im wesentlichen geradlinig entlang einer Längsseitenwand des Gerätegehäuses verlaufenden Betätigungsschieber gebildet, der im Bereich eines seiner beiden Enden mit einem entlang der vorstehend erwähnten Längsseitenwand verschiebbaren, als Handhabe vorgesehenen Schiebeknopf durch einen Durchgang in dieser Längsseitenwand hindurch verbunden ist und dessen anderes Ende ein weiteres Koppelungselement der vorerwähnten Koppelungseinrichtung zum Koppeln von der Betätigungseinrichtung und der Steuereinrichtung bildet.

Bei diesem bekannten Gerät ist die Anordnung des Chassis und der am Chassis angebrachten Geräteteile in Relation zum Gerätegehäuse in der Weise gewählt, daß eine Verbindungslinie zwischen den beiden am Chassis drehbar gelagerten Wickeldornen parallel zur Längsrichtung des schmalen, flachen, quaderförmigen Gerätegehäuses verläuft, wobei sich die vorerwähnte Handhabe an der vorstehend erwähnten Längsseitenwand des Gerätegehäuses befindet. Somit nehmen bei dem bekannten Gerät das Chassis und die daran angebrachten Geräteteile einerseits und die Handhabe andererseits eine bestimmte Relativlage zueinander ein, die durch die Anordnung des Chassis im Gerätegehäuse festgelegt ist und nicht verändert werden kann.

Die Erfindung hat sich zur Aufgabe gestellt, bei einem Gerät der im ersten Absatz angeführten Gattung auf einfache Weise die Möglichkeit zu schaffen, zwei hinsichtlich der Position des Chassis und der daran angebrachten Geräteteile in einem Gerätegehäuse unterschiedliche Gerätevarianten realisieren zu können, in denen dasselbe Chassis samt denselben daran angebrachten Geräteteilen verwendet ist und bei denen die Handhaben zum Steuern der Funktionen des Gerätes und des Verstellens von verstellbaren Geräteteilen im wesentlichen je dieselbe Position am jeweiligen Gerätegehäuse der beiden Gerätevarianten einnehmen. Hierfür ist die Erfindung dadurch gekennzeichnet, daß die Steuereinrichtung zwei um einen bestimmten Winkel bezüglich der Achse zueinander versetzt angeordnete Koppelungselemente aufweist und daß mit jedem Koppelungselement der Steuereinrichtung ein Koppelungselement einer von zwei Betätigungseinrichtungen in Wirkverbindung bringbar ist, von denen eine Betätigungseinrichtung in der einen vorgegebenen Relativlage zum Chassis und den am Chassis angebrachten Geräteteilen und die andere Betätigungseinrichtung in einer gegenüber der einen Relativlage im wesentlichen um den bestimmten Winkel verdrehten Relativlage zum Chassis und den am Chassis angebrachten Geräteteilen mit der Steuereinrichtung koppelbar ist. Hierdurch ist erreicht, daß ein und dasselbe Chassis samt denselben daran angebrachten Geräteteilen zur Bildung von zwei hinsichtlich der Position des Chassis und der daran angebrachten Geräteteile in einem Gerätegehäuse unterschiedlichen Gerätevarianten, in zwei um den bestimmten Winkel zueinander verdrehten Positionen in jeweils ein Gerätegehäuse eingebaut werden können und dabei die Handhaben trotz unterschiedlicher Gerätevarianten im wesentlichen je an derselben ergonomisch vorteilhaften Position am jeweiligen Gerätegehäuse sich befinden, wobei die Handhaben je nach Gerätevariante über geringfügig unterschiedlich ausgebildete Betätigungseinrichtungen mit der Steuereinrichtung des betreffenden Gerätes über eine Koppelungseinrichtung gekoppelt sind.

Als vorteilhaft hat sich erwiesen, wenn die beiden Koppelungselemente der Steuereinrichtung im wesentlichen um 90° bezüglich der Achse zueinander versetzt angeordnet sind. Auf diese Weise sind die in der Praxis am häufigsten gewünschten Gerätevarianten realisierbar.

Als besonders vorteilhaft hat sich erwiesen, wenn die Koppelungselemente der Steuereinrichtung durch Öffnungen in der Steuereinrichtung gebildet sind, in die als Koppelungselemente der Betätigungseinrichtungen von diesen abstehende Stifte einführbar sind. Dies ist im Hinblick auf eine besonders einfache und betriebssichere Ausbildung der Koppelungseinrichtung vorteilhaft.

Als besonders vorteilhaft hat sich auch erwiesen, wenn die Koppelungselemente der Steuereinrichtung durch von dieser abstehende Stifte gebildet sind, die in als Koppelungselemente der Betätigungseinrichtungen in diesen vorgesehene Offnungen einführbar sind. Auch dies ist im Hinblick auf eine besonders einfache und betriebssichere Ausbildung der Koppelungseinrichtung vorteilhaft.

Als vorteilhaft hat sich auch erwiesen, wenn die Steuereinrichtung einen Innenbereich, mit dem die Steuereinrichtung um die Achse verschwenkbar gelagert ist, und einen mit dem Innenbereich verbundenen, im wesentlichen kreisringsektorförmigen Randbereich aufweist, der koaxial zu der Achse angeordnet ist, und die beiden Koppelungselemente der Steuereinrichtung in dem kreisringsektorförmigen Randbereich vorgesehen sind. Dies ist im Hinblick auf eine stabile Ausbildung und Lagerung der Steuereinrichtung vorteilhaft.

Als vorteilhaft hat sich weiters erwiesen, wenn bei einem Gerät mit einer am Chassis vorgesehenen Achse für einen rotierend antreibbaren Geräteteil zum Antreiben eines Aufzeichnungsträgers die Steuereinrichtung um die Achse für den rotierend antreibbaren Geräteteil verschwenkbar gelagert ist. Dies ist im Hinblick auf eine möglichst einfache und raumsparende Ausbildung vorteilhaft.

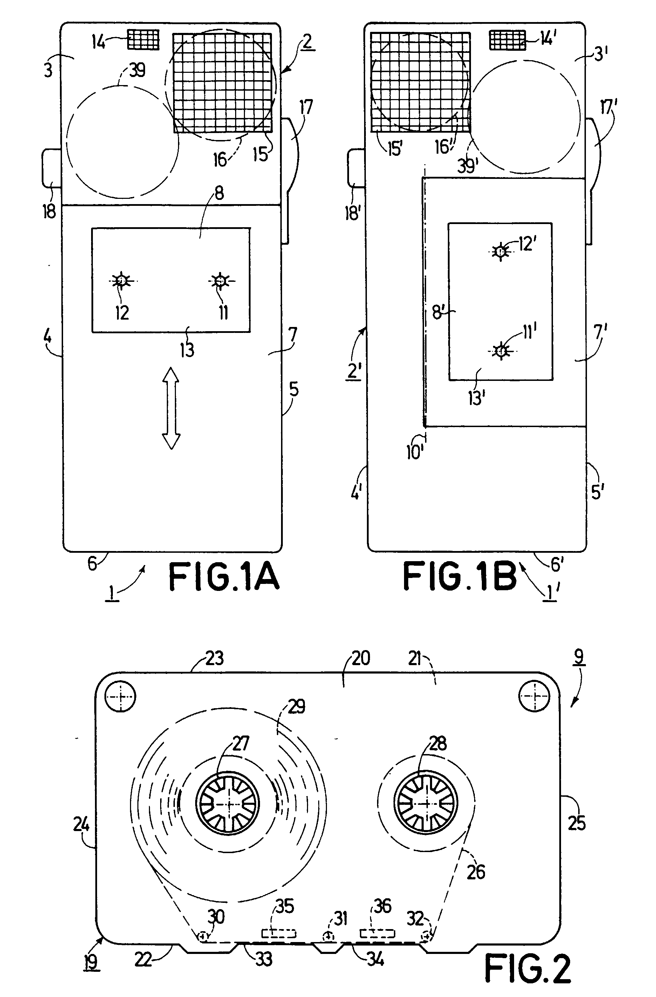

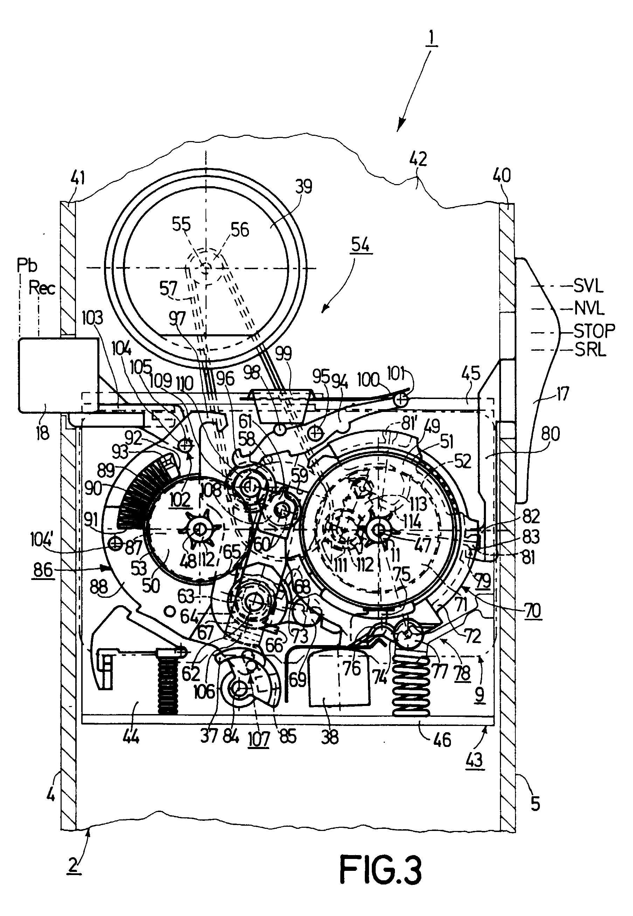

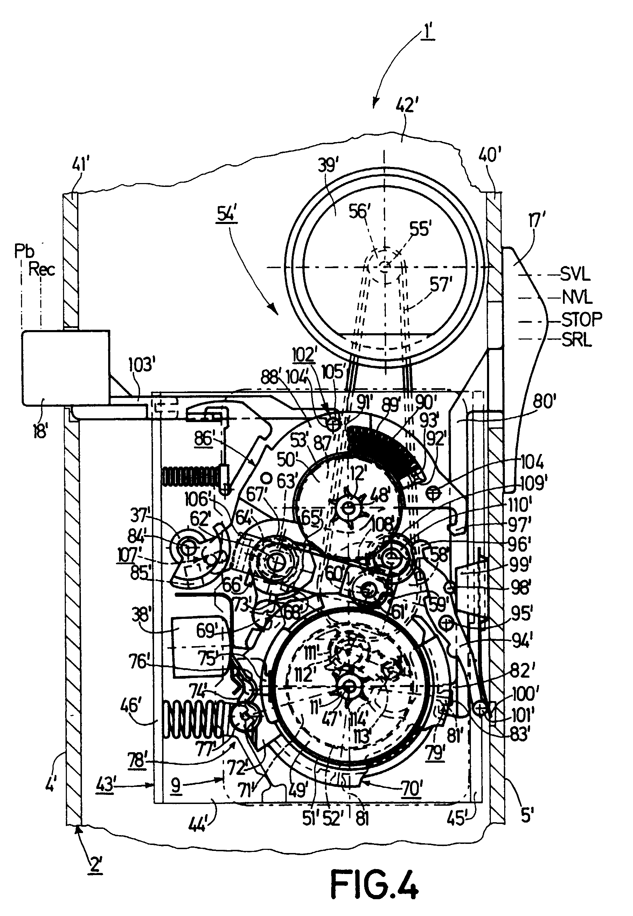

Die Erfindung wird im folgenden anhand von zwei in den Zeichnungen dargestellten Ausführungsbeispielen näher beschrieben, auf die die Erfindung jedoch nicht beschränkt sein soll. Die Fig. 1 zeigt etwa in natürlicher Größe in Draufsicht zwei als Taschendiktiergeräte ausgebildete Aufzeichnungs- und Wiedergabegeräte gemäß zwei Ausführungsbeispielen der Erfindung, in die je eine ein Magnetband als Aufzeichnungsträger enthaltende Kassette einsetzbar ist, wobei im Teil A der Figur 1 ein längliches Taschendiktiergerät dargestellt ist, in das eine Kassette mit ihrer Längserstreckung quer zur Längserstreckung des Taschendiktiergerätes einsetzbar ist, und wobei im Teil B der Fig. 1 ein längliches Taschendiktiergerät dargestellt ist, in das eine Kassette mit ihrer Längserstreckung parallel zur Längserstreckung des Taschendiktiergerätes einsetzbar ist. Die Fig. 2 zeigt teilweise schematisiert in einem gegenüber der natürlichen Größe größeren Maßstab in Draufsicht eine in die beiden Taschendiktiergeräte gemäß Fig. 1 einsetzbare Kassette. Die Fig. 3 zeigt in etwas vereinfachter Weise in einem gegenüber der Figur 1 größeren Maßstab einen Teil des Taschendiktiergerätes gemäß dem Teil A der Figur 1 in Draufsicht bei weggeschnittenem Geräteoberteil, wobei der dargestellte Teil des Gerätes zwei Steuereinrichtungen zum Steuern des Verstellens von auf einem Chassis des Gerätes verstellbar gehaltenen Geräteteilen enthält. Die Fig. 4 zeigt auf analoge Weise wie die Fig. 3 einen Teil des Gerätes gemäß dem Teil B der Fig. 1.

Bezüglich der nachfolgenden Figurenbeschreibung sei vorausgehend festgehalten, daß die Bezugszeichen für einander gleiche bzw. entsprechende Geräteteile der beiden Taschendiktiergeräte gemäß Fig. 1 an sich gleich gewählt sind. Jedoch ist bei den Bezugszeichen für Geräteteile des Taschendiktiergerätes gemäß dem Teil B der Fig. 1 zusätzlich ein Apostroph vorgesehen.

Die Fig. 1 zeigt in ihren beiden Teilen A und B je ein als Taschendiktiergerät ausgebildetes Aufzeichnungs- und Wiedergabegerät 1, 1' zum Aufzeichnen und Wiedergeben von Sprachsignalen. Die beiden Geräte 1, 1' haben je ein schmales, flaches, quaderförmiges Gehäuse 2, 2'.

Das Gerät 1 gemäß dem Teil A der Fig. 1 weist einen entlang der Geräteoberseite 3 verschiebbar gehaltenen, bis in die beiden langen Geräteschmalseiten 4 und 5 und eine kurze Geräteschmalseite 6 reichenden Verschlußdeckel 7 zum Verschließen eines Kassettenaufnahmeraumes 8 auf, in den eine ein Magnetband als Aufzeichnungsträger enthaltende Kassette 9, wie sie in Fig. 2 dargestellt ist, mit ihrer Längserstreckung quer zur LÄngserstreckung des Gerätes 1 einsetzbar ist.

Das Gerät 1' gemäß dem Teil B der Figur 1 weist einen an der Geräteoberseite 3' um eine schematisch angedeutete Schwenkachse 10' verschwenkbar gelagerten, bis in eine lange Geräteschmalseite 5' reichenden Verschlußdeckel 7' zum Verschließen eines Kassettenaufnahmeraumes 8' auf, in den eine ein Magnetband als Aufzeichnungsträger enthaltende Kassette 9, wie sie in Fig. 2 dargestellt ist, mit ihrer Längserstreckung parallel zur Längserstreckung des Gerätes 1' einsetzbar ist.

In Fig. 1 ist eine Situation dargestellt, in der sich keine Kassette in dem Kassettenaufnahmeraum 8, 8' des betreffenden Gerätes 1, 1' befindet. In den Kassettenaufnahmeraum 8, 8' ragen von der Geräteunterseite her ein Vorlauf-Wickeldorn 11, 11' und ein Rücklauf-Wickeldorn 12, 12', die durch einen durchsichtigen Fensterteil 13, 13' des Verschlußdeckels 7, 7' hindurch sichtbar sind. An der Geräteoberseite 3, 3' ist weiters ein schematisch dargestelltes Feld 14, 14' von Schalldurchtrittslöchern, hinter denen sich ein in das Gerät 1, 1' eingebautes, nicht dargestelltes Mikrofon befindet, und weiters ein schematisch dargestelltes Feld 15, 15' von Schalldurchtrittslöchern vorgesehen, hinter denen sich ein in das Gerät 1, 1' eingebauter Lautsprecher 16, 16' befindet. An der in Fig. 1 jeweils rechten langen Geräteschmalseite 5, 5' weist das Gerät 1, 1' einen in Längsrichtung dieser Geräteschmalseite 5, 5' verschiebbaren Schiebeknopf 17, 17' auf, der zum Einschalten von Bandlauf-Betriebsarten des Gerätes 1, 1' dient. Der Schiebeknopf 17, 17' ist von Hand aus, wie dies in den Figuren 3 und 4 schematisch angedeutet ist, zwischen vier Betriebsstellungen SRL, STOP, NVL und SVL hin und her verschiebbar, wobei diese vier Betriebsstellungen aufeinanderfolgend den Bandlauf-Betriebsarten "Schnellrücklauf", "Stop", "Normalvorlauf" und " Schnellvorlauf" entsprechen. An der in Fig. 1 jeweils linken langen Geräteschmalseite 4, 4' weist das Gerät 1, 1' einen quer zur Längsrichtung dieser Geräteschmalseite 4, 4' zwischen zwei in den Figuren 3 und 4 schematisch angedeuteten Betriebsstellungen Pb und Rec verstellbaren Druckknopf 18, 18' auf, der zum Einschalten einer WiedergabeBetriebsart des Gerätes 1, 1' in seiner Betriebsstellung Pb und zum Einschalten einer Aufnahme-Betriebsart des Gerätes 1, 1' in seiner Betriebsstellung Rec dient.

Wie aus Fig. 1 ersichtlich ist, sind bei beiden Taschendiktiergeräten 1, 1' die Knöpfe 17 und 18 bzw. 17' und 18' in denselben Positionen am jeweiligen Gerät vorgesehen, obwohl die Kassette 9 in zwei um 90° zueinander verdrehten Positionen in die beiden Geräte 1, 1' eingesetzt wird und demzufolge selbstverständlich auch die beiden Laufwerke der Geräte 1, 1' um 90° zueinander verdrehte Positionen einnehmen.

Die Kassette 9 hat ein quaderförmiges Gehäuse 19, das eine in Fig. 2 sichtbare erste Kassettenhauptseite 20, eine in Fig. 2 nicht sichtbare zweite Kassettenhauptseite 21, eine vordere lange Kassettenschmalseite 22, eine hintere lange Kassettenschmalseite 23, eine gemäß Fig. 2 linke kurze Kassettenschmalseite 24 und eine gemäß Fig. 2 rechte kurze Kassettenschmalseite 25 aufweist. In der Kassette 9 ist als Aufzeichnungsträger zum Speichern von Sprachsignalen ein Magnetband 26 untergebracht, wobei zum Aufwickeln des Magnetbandes 26 zwei nebeneinanderliegende, rotierend antreibbare Wickelkerne 27 und 28 zwischen den beiden Kassettenhauptseiten 20 und 21 drehbar gelagert sind. Das Magnetband 26 ist mit seinen Enden an den Wickelkernen 27 und 28 verankert und bei der in Fig. 2 dargestellten Kassette 9 zur Gänze auf den Wickelkern 27 zu einem Bandwickel 29 aufgewickelt. Das Magnetband 26 verläuft von dem auf den Wickelkern 27 aufgewickelten Bandwickel 29 über drei zylindrische Bandführungen 30, 31 und 32 zu dem anderen Wickelkern 28. Mittels der Bandführungen 30, 31 und 32 ist das Magnetband 26 längs der vorderen langen Kassettenschmalseite 22 geführt, in der zwei Durchbrüche 33 und 34 vorgesehen sind. Im Bereich der beiden Durchbrüche 33 und 34 sind zwei in der Kassette 9 auf nicht dargestellte Weise verstellbar gehaltene Andruckfilze 35 und 36 vorgesehen, mit denen das Magnetband 26 gegen die Kopfspiegelflächen von zwei geräteseitigen, mit dem Magnetband 26 durch die beiden Durchbrüche 33 und 34 hindurch in Abtastverbindung bringbaren Magnetköpfen 37 und 38, 37' und 38' drückbar ist. Bei den beiden Magnetköpfen 37 und 38, 37' und 38', die in den Figuren 3 und 4 schematisch dargestellt sind, handelt es sich um einen Lösch-Magnetkopf 37, 37' zum Löschen von Sprachsignalen von dem Magnetband 26 und einen Aufzeichnungs- und Wiedergabe-Magnetkopf 38, 38' zum Aufzeichnen und Wiedergeben von Sprachsignalen auf bzw. von dem Magnetband 26.

Die Kassette 9 ist in zwei zueinander gewendeten Lagen in das Gerät 1, 1' einsetzbar, wobei beim Einsetzen der Kassette 9 die geräteseitigen Wickeldorne 11, 11' und 12, 12' je nach Lage der Kassette 9 durch eine der beiden Kassettenhauptseiten 20 bzw. 21 hindurch mit den Wickelkernen 27 und 28 in Antriebsverbindung treten, so daß bei in das Gerät 1, 1' eingesetzter Kassette 9 jeder der beiden Wickeldorne 11, 11' und 12, 12' mit einem der beiden Wickelkerne 27 und 28 zum Antreiben des Magnetbandes 26 in Antriebsverbindung steht. Bei jedem der beiden Geräte 1, 1' erfolgt der Antrieb des Magnetbandes 26 in allen Bandlauf-Betriebsarten nur durch Antreiben eines der beiden Wickeldorne 11, 11' und 12, 12'. Das Antreiben der Wickeldorne 11, 11' und 12, 12' erfolgt über eine in der Fig. 1 nicht angedeutete Antriebseinrichtung von einem im Gerät 1, 1' untergebrachten Motor 39, 39', der in Fig. 1 schematisch angedeutet ist.

Im folgenden ist anhand der Figuren 3 und 4 jeweils der im Zusammenhang mit der Erfindung wesentliche Teil des Gerätes 1 gemäß dem Teil A der Fig. 1 und des Gerätes 1' gemäß dem Teil B der Fig. 1 beschrieben. In dem Raum zwischen zwei langen Seitenwänden 40, 40' und 41, 41', von denen die Seitenwand 40, 40' an der langen Geräteschmalseite 5, 5' liegt und die Seitenwand 41, 41' an der langen Geräteschmalseite 4, 4' liegt, und einer Bodenwand 42, 42' des Gerätegehäuses 2, 2' ist ein aus Kunststoff bestehendes, in einem Spritzvorgang hergestelltes Chassis 43, 43' festgehalten, das einen parallel zur Bodenwand 42, 42' verlaufenden, im wesentlichen plattenförmigen Chassisteil 44, 44' und zwei von diesem plattenförmigen Chassisteil 44, 44' senkrecht abstehende leistenförmige Chassisteile 45, 45' und 46, 46' aufweist. In den plattenförmigen Chassisteil 44, 44' sind zwei Achsen 47, 47' und 48, 48' drehfest eingesetzt. Auf der einen Achse 47, 47' ist der Vorlauf-Wickeldorn 11, 11' und auf der anderen Achse 48, 48' ist der Rücklauf-Wickeldorn 12, 12' drehbar gelagert. Jeder der beiden Wickeldorne 11, 11' und 12, 12' ist mit einem von zwei je zu einem der beiden Wickeldorne 11, 11' und 12, 12' koaxial angeordneten Antriebsrädern 49, 49' und 50, 50' drehfest verbunden, indem jeder Wickeldorn 11, 11' bzw. 12, 12' mit dem betreffenden Antriebsrad 49, 49' bzw. 50, 50' einstückig ausgebildet ist. Das mit dem Vorlauf-Wickeldorn 11, 11' drehfest verbundene Vorlauf-Antriebsrad 49, 49' ist topfförmig ausgebildet, und es weist an seinem äußeren Umfangsbereich einen Reibradbereich 51, 51', der durch einen Gummiring gebildet ist, und an seinem inneren Umfangsbereich einen Zahnradbereich 52, 52' auf. Das mit dem Rücklauf-Wickeldorn 12, 12' drehfest verbundene Rücklauf-Antriebsrad 50, 50' ist ebenso topfförmig ausgebildet, und es weist an seinem äußeren Umfangsbereich einen Zahnradbereich 53, 53' auf, der durch eine gerade Verzahnung gebildet ist.

Das Gerät 1, 1' weist eine Antriebseinrichtung 54, 54' auf, die zum Antreiben des Vorlauf-Antriebsrades 49, 49' in den beiden Betriebsarten "Normalvorlauf" und "Schnellvorlauf" und zum Antreiben des Rücklauf-Antriebsrades 50, 50'1 in der Betriebsart "Schnellrücklauf" vorgesehen ist. Die Antriebseinrichtung 54, 54' enthält den Motor 39, 39', der hierbei an der Bodenwand 42, 42' des Gerätegehäuses 2, 2' befestigt ist und auf dessen Motorachse 55, 55' ein Pesenrad 56, 56' sitzt. Um das Pesenrad 56, 56' ist eine Pese 57, 57' geschlungen, die andererseits um ein weiteres Pesenrad 58, 58' geschlungen ist, das zugleich eine Schwungmasse bildet. Das weitere Pesenrad 58, 58' liegt unterhalb des Chassisteiles 44, 44', und es ist mit einer durch einen Durchgang 59, 59 in dem Chassisteil 44, 44' nach oben hindurchragenden, im wesentlichen in einem Bereich zwischen den beiden Antriebsrädern 49, 49' und 50, 50' angeordneten, in verschiedene Antriebslagen verstellbaren Antriebswelle 60, 60' koaxial und drehfest verbunden und so ist diese vom Motor 89, 89' über die Pese 57, 57' und das weitere Pesenrad 58, 58' rotierend antreibbar.

Die Antriebswelle 60, 60' ist an einem im wesentlichen doppel-T-förmig ausgebildeten Lagerbock 61, 61' drehbar gelagert, der seinerseits um eine Achse 62, 62' verschwenkbar gelagert ist und der zwischen verschiedenen Betriebslagen hin und her verstellbar ist. Die Achse 62, 62' ist hierbei von einem mit dem Chassis 43, 43' verbundenen galgenartigen Träger 106, 106' getragen, von dem sie zum Chassisteil 44, 44' hin absteht.

Auf die Achse 62, 62' ist eine Hülse 63, 63' koaxial aufgesetzt, auf der ihrerseits eine Schenkelfeder 64, 64' sitzt, die sich mit ihrem einen Schenkel 65, 65' an dem Lagerbock 61, 61' und mit ihrem anderen Schenkel 66, 66' an einem auf der Hülse verschwenkbar gelagerten Verstellhebel 67, 67' mit Vorspannung abstützt. Der Verstellhebel 67, 67' ist hierbei mit einem bogenförmigen Ansatz 68, 68' desselben am Lagerbock 61, 61' abgestützt. Der Verstellhebel 67, 67' trägt an seinem freien Ende eine Verstellrolle 69, 69'.

Die Antriebswelle 60, 60' der Antriebseinrichtung 54, 54' dient mit einem Abschnitt derselben als Reibradantrieb, wobei durch Andrücken der Antriebswelle mit diesem Abschnitt an den Gummiring 51, 51' des Vorlauf-Antriebsrades 49, 49', was durch entsprechendes Verstellen des Lagerbockes 61, 61' erfolgt, das Vorlauf-Antriebsrad 49, 49' in einer Betriebsart "Normalvorlauf" rotierend antreibbar ist. Auf der Antriebswelle 60, 60' sitzt koaxial ein Ritzel 108, 108' der Antriebseinrichtung 54, 54'. Dieses Ritzel 108, 108' ist durch entsprechendes Verstellen des Lagerbockes 61, 61' in einer Betriebsart "Schnellrücklauf" mit einem am Chassisteil 44, 44' drehbar gelagerten Zahnrad 109, 109' in Eingriff bringbar, das mit einem weiteren Zahnrad 110, 110' koaxial und drehfest verbunden ist, das seinerseits mit der Verzahnung 53, 53' des Rücklauf-Antriebsrades 50, 50' ständig in Eingriff steht. Über die beiden Zahnräder 109, 109' und 110, 110' der Antriebseinrichtung 54, 54' ist das Rücklauf-Antriebsrad 50, 50' vom Ritzel 108, 108' her in der Betriebsart "Schnellrücklauf" rotierend antreibbar. Das Ritzel 108, 108' ist durch entsprechendes Verstellen des Lagerbockes 61, 61' in einer Betriebsart "Schnellvorlauf" mit einem Zahnrad 111, 111' in Eingriff bringbar, das mit einem weiteren Zahnrad 112, 112' koaxial und drehfest verbunden ist, das mit dem Zahnradbereich 52, 52' des Vorlauf-Antriebsrades 49, 49' in Eingriff bringbar ist. Die beiden koaxialen Zahnräder 111, 111' und 112, 112' der Antriebseinrichtung 54, 54' sind auf einem Lagerhebel 113, 113' drehbar gelagert, der am Chassisteil 44, 44' verschwenkbar gehalten ist. Die beiden koaxialen Zahnräder 111, 111' und 112, 112' sind durch Verstellen des Lagerhebels 113, 113' in eine Schnellvorlauf-Antriebslage verstellbar, in der das eine Zahnrad 112, 112' mit dem Zahnradbereich 52, 52' des Vorlauf-Antriebsrades 49, 49' und das andere Zahnrad 111, 111' mit dem Ritzel 108, 108' in Eingriff steht, wobei dann vom vom Ritzel 108, 108' über die Zahnräder 111, 111' und 112, 112' das Vorlauf-Antriebsrad 49, 49' in der Betriebsart "Schnellvorlauf" antreibbar ist.

Zum Steuern des Verstellens der Verstellrolle 69, 69' und des Verstellhebels 67, 67' und folglich des Lagerbockes 61, 61' samt der Antriebswelle 60, 60' und dem zu ihr koaxialen Ritzel 108, 108' und auch zum Steuern des Verstellens weiterer verstellbarer Geräteteile des Gerätes 1, 1', wie etwa des Lagerhebels 113, 113' samt den Zahnrädern 111, 111' und 112, 112', weist das Gerät 1, 1' eine Steuereinrichtung 70, 70' auf. Die Steuereinrichtung 70, 70' ist um die Achse 47, 47', mit der der Vorlauf-Wickeldorn 11, 11' und das Vorlauf-Antriebsrad 49, 49' drehbar gelagert sind, verschwenkbar gelagert. Die Steuereinrichtung 70, 70' weist hierbei einen im wesentlichen kreissektorförmigen Innenbereich 71, 71' auf, mit dem die Steuereinrichtung 70, 70' um die Achse 47, 47' verschwenkbar gelagert ist. Weiters weist die Steuereinrichtung 70, 70' einen mit dem Innenbereich 71, 71' verbundenen, im wesentlichen kreisringsektorförmigen Randbereich 72, 72' auf, der koaxial zu der Achse 47, 47' angeordnet ist. Die Steuereinrichtung 70, 70' weist in ihrem Randbereich 72, 72' eine erste Steuerkulisse 73, 73' zum Steuern des Verstellens der Verstellrolle 69, 69' auf. Weiters weist die Steuereinrichtung 70, 70' eine zweite Steuerkulisse 74, 74' zum Steuern des Verstellens einer Bremseinrichtung 75, 75' für das Vorlauf-Antriebsrad 49, 49' auf. Weiters weist die Steuereinrichtung 70, 70' einen vom Randbereich 72, 72' nach innen abstehenden federnden Arm 114, 114' auf, der zum Zusammenwirken mit dem Lagerhebel 113, 113' vorgesehen ist, auf dem die beiden koaxialen Zahnräder 111, 111' und 112, 112' drehbar gelagert sind. Mit dem Arm 114, 114' ist der Lagerhebel 113, 113' so verstellbar, daß die beiden Zahnräder 111, 111' und 112, 112' in ihre Schnellvorlauf-Antriebslage verschwenkt werden. Weiters ist die Steuereinrichtung 70, 70' in ihrem Randbereich 72, 72' mit einer Rastkulisse 76, 76' versehen, die mit einer eine Rastrolle 77, 77' aufweisenden Rasteinrichtung 78, 78' zusammenwirkt.

An dieser Stelle sei erwähnt, daß eine wie bei den Geräten 1, 1' vorliegende Steuereinrichtung 70, 70' sowie eine wie bei den Geräten 1, 1' vorliegende Antriebseinrichtung 54, 54' in der europäischen Patentanmeldung mit der Anmeldenummer 94 ... ..., die der österreichischen Prioritätspatentanmeldung mit der Anmeldenummer A .../93 entspricht (PHO 93-502), im Detail beschrieben sind. Durch diesen Hinweis auf die vorgenannten Patentanmeldungen gilt der Offenbarungsgehalt derselben als hier mitaufgenommen (herewith incorporated by reference).

Die Steuereinrichtung 70, 70' ist über eine Koppelungseinrichtung 79, 79' mit einer verstellbaren Betätigungseinrichtung 80, 80' gekoppelt, die in einer vorgegebenen Relativlage zum Chassis 43, 43' und den daran angebrachten Geräteteilen über die Koppelungseinrichtung 79, 79' mit der Steuereinrichtung 70, 70' koppelbar ist und die mit dem außerhalb des Gerätegehäuses 2, 2' befindlichen, von Hand aus betätigbaren Schiebeknopf 17, 17' des Gerätes 1, 1' verbunden ist, wobei die Koppelungseinrichtung 79, 79' an der Steuereinrichtung 70, 70' und an der Betätigungseinrichtung 80, 80' je ein Koppelungselement aufweist. Die Koppelungseinrichtung 79, 79' ist im vorliegenden Fall durch eine Stift-Schlitz-Verbindung gebildet, die einen vom Randbereich 72, 72' der Steuereinrichtung 70, 70' abstehenden Stift 81, 81' und einen in einem seitlich abstehenden Fortsatz 82, 82' der Betätigungseinrichtung 80, 80' vorgesehenen Schlitz 83, 83' aufweist. Die Betätigungseinrichtung 80, 80' ist als Schieber ausgebildet, der parallel zur Seitenwand 40, 40' des Gerätegehäuses 2, 2' verschiebbar geführt ist.

Das Gerät 1, 1' weist, wie bereits vorstehend erwähnt, einen Aufnahme/-Wiedergabe-Magnetkopf 38, 38', der am Chassis 44, 44' stationär befestigt ist, und einen Lösch-Magnetknopf 37, 37' auf, der am Chassis 44, 44' verschwenkbar gehalten ist. Der Löschkopf 37, 37' ist als sogenannter Permanentmagnet-Löschkopf ausgebildet und um eine Achse 84, 84' am Chassis 44, 44' verschwenkbar gelagert. Der Löschkopf 37, 37' enthält einen Permanentmagneten 85, 85', der aus einer in den Figuren 3 und 4 dargestellten Nichtbetriebsposition durch Verschwenken des gesamten Löschkopfes 37, 37' entgegen dem Uhrzeigersinn gemäß den Figuren 3 und 4 in eine Betriebsposition verschwenkbar ist, in der der Permanentmagnet 85, 85' mit dem in der Kassette 9 untergebrachten Magnetband 26 in Abtastverbindung steht, so daß dann bei einem Fortbewegen des Magnetbandes 26 mit Hilfe des Permanentmagneten 85, 85' auf dem Magnetband 26 zuvor aufgezeichnetes Signale gelöscht werden. Ein solches Löschen von zuvor aufgezeichneten Signalen wird bei dem Gerät 1, 1' in der Betriebsart "Aufnahme" des Gerätes 1, 1' vorgenommen, weshalb der Permanentmagnet 85, 85' des Löschkopfes 37, 37' in seine Betriebsposition dann verschwenkt wird, wenn im Gerät 1, 1' die Betriebsart "Aufnahme" eingeschaltet wird.

Zum Steuern des Verstellens des Löschkopfes 37, 37' und auch zum Verstellen eines nicht dargestellten Aufnahme/Wiedergabe-Umschalters weist das Gerät 1, 1' eine weitere Steuereinrichtung 86, 86' auf. Die Steuereinrichtung 86, 86' ist hierbei ebenso wie die Steuereinrichtung 70, 70' mit einem im wesentlichen kreissektorförmigen Innenbereich 87, 87' versehen, mit dem die Steuereinrichtung 86, 86' um die Achse 48, 48' verschwenkbar ist, mit der der Wickeldorn 12, 12' und das Rücklauf-Antriebsrad 50, 50' drehbar gelagert sind. Die Steuereinrichtung 86, 86' weist weiters einen mit dem Innenbereich 87, 87' verbundenen, im wesentlichen kreisringsektorförmigen Randbereich 88, 88' auf, der koaxial zu der Achse 48, 48' angeordnet ist. In der Steuereinrichtung 86, 86' ist eine kreisbogenförmige Aussparung 89, 89' vorgesehen, in der eine Druckfeder 90, 90' aufgenommen ist, die sich einerseits an einem Ende 91, 91' der Aussparung 89, 89' und andererseits an einem im Bereich des anderen Endes 92, 92' der Aussparung 89, 89' in diese Aussparung 89, 89' ragenden, von dem Chassisteil 44, 44' des Chassis 43, 43' senkrecht abstehenden Anschlag 93, 93' abstützt. Die Druckfeder 90, 90' belastet die Steuereinrichtung 86, 86' gemäß den Figuren 3 und 4 entgegen dem Uhrzeigersinn, was bei der in den Figuren 3 und 4 dargestellten Situation zur Folge hat, daß sich die Steuereinrichtung 86, 86' mit dem Ende 92, 92' ihrer Aussparung 89, 89' an dem Anschlag 93, 93' abstützt, wodurch die Lage der Steuereinrichtung 86, 86' in dieser Situation festgelegt ist. In dieser Lage der Steuereinrichtung 86, 86' ist im Gerät 1, 1' die Betriebsart "Wiedergabe" eingeschaltet. In dieser Lage der Steuereinrichtung 86, 86' ist der Löschkopf 37, 37', der über eine Stift-Schlitz-Verbindung 107, 107' mit der Steuereinrichtung 86, 86' gekoppelt ist, in seine Nichtbetriebsposition verschwenkt gehalten.

Die Steuereinrichtung 86, 86' ist durch Betätigen des Druckknopfes 18, 18' aus der in den Figuren 3 und 4 dargestellten Lage im Uhrzeigersinn in eine weitere Lage verschwenkbar, in der dann im Gerät 1, 1' die Betriebsart "Aufnahme" eingeschaltet ist und in der die Steuereinrichtung 86, 86' mit einem Verriegelungshebel 94, 94' verriegelbar ist, wobei dann über die Stift-Schlitz-Verbindung 107, 107' der Löschkopf 37, 37' in seine Betriebsposition verschwenkt gehalten ist. Der Verriegelungshebel 94, 94' ist um eine Achse 95, 95' gegenüber dem Chassis 43, 43' verschwenkbar und weist an einem Ende einen Verriegelungshaken 96, 96' auf, der zum Zusammenwirken mit einem an der Steuereinrichtung 86, 86' vorgesehenen Gegenhaken 97, 97' vorgesehen ist. Der Verriegelungshebel 94, 94' ist über einen von ihm abstehenden Stift 98, 98' mittels einer im wesentlichen U-förmigen, am Chassis 43, 43' abgestützten Blattfedereinrichtung 99, 99' in einer Freigabelage festhaltbar. Die Blattfedereinrichtung 99, 99' wird durch das Einsetzen einer Kassette 9 in das Gerät 1, 1' soweit von dem Verriegelungsheb-el 95, 95' bzw. von dessen Stift 98, 98' weg verstellt, daß der Verriegelungshebel 94, 94' durch die Kraftwirkung eines seitlich abstehenden zusätzlichen Federarmes 100, 100' der Blattfedereinrichtung 99, 99', der an einem weiteren vom Verriegelungshebel 94, 94' abstehenden Stift 101, 101' angreift, in seine Verriegelungslage verstellbar ist.

An dieser Stelle sei erwähnt, daß eine wie bei dem Gerät 1, 1' gemäß den Figuren 3 und 4 vorgesehene Steuereinrichtung 86, 86' und eine für diese Steuereinrichtung 86, 86' vorgesehene Verriegelungseinrichtung mit einem Verriegelungshebel 94, 94' und einer Blattfedereinrichtung 99, 99' in der europäischen Patentanmeldung mit der Anmeldenummer 93 ... ..., die der österreichischen Prioritätspatentanmeldung A 2529/92 entspricht (PHO 92-520), detailliert beschrieben ist. Durch diesen Hinweis auf die vorgenannten Patentanmeldungen gilt der Offenbarungsinhalt derselben als hier mitaufgenommen (herewith incorporated by reference).

Die Steuereinrichtung 86, 86' ist über eine Koppelungseinrichtung 102, 102' mit einer verstellbaren Betätigungseinrichtung 103, 103' gekoppelt, die in einer vorgegebenen Relativlage zum Chassis 43, 43' und den daran angebrachten Geräteteilen über die Koppelungseinrichtung 102, 102' mit der Steuereinrichtung 86, 86' koppelbar ist und die mit dem zumindest teilweise außerhalb des Gerätegehäuses 2, 2' befindlichen, von Hand aus betätigbaren Druckknopf 18, 18' des Gerätes 1, 1' verbunden ist, wobei die Koppelungseinrichtung 102, 102' an der Steuereinrichtung 86, 86' und an der Betätigungseinrichtung 103, 103' je ein Koppelungselement aufweist. Die Koppelungseinrichtung 102, 102' ist durch eine Stift-Loch-Verbindung gebildet. Die Koppelungseinrichtung 102, 102' weist hierbei ein in der Steuereinrichtung 86, 86' vorgesehenes Loch 104, 104' auf, in das ein von der Betätigungseinrichtung 103, 103' abstehender Stift 105, 105' hineinragt. Die Betätigungseinrichtung 103, 103' ist ebenso wie die Betätigungseinrichtung 80, 80' durch einen Schieber gebildet, der am Chassis 43, 43' verschiebbar geführt ist.

Jede der beiden Steuereinrichtungen 70, 70' und 86, 86' weist hierbei vorteilhafterweise zwei um einen Winkel von 90° bezüglich der Achse 47, 47' bzw. 48, 48' zueinander versetzt angeordnete Koppelungselemente auf. Die Steuereinrichtung 70, 70' ist in ihrem Randbereich 72, 72' hierfür nicht nur mit einem seitlich abstehenden Stift 81, 81' versehen, sondern zusätzlich auch noch mit einem zu dem einen Stift 81, 81' um 90° winkelversetzten zweiten Stift 81', 81. Die Steuereinrichtung 86, 86' ist hierfür nicht nur mit einem Loch 104, 104', sondern zusätzlich auch noch mit einem um 90° zu dem einen Loch 104, 104' winkelversetzten zweiten Loch 104', 104 versehen. Wie aus den Figuren 3 und 4 ersichtlich ist, ist mit jedem Koppelungselement 81, 81' der Steuereinrichtung 70, 70' und mit jedem Koppelungselement 104, 104' der Steuereinrichtung 86, 86' ein Koppelungselement 83, 83' bzw. 105, 105' einer von zwei Betätigungseinrichtungen 80, 80' und 103, 103' in Wirkverbindung bringbar, von denen eine Betätigungseinrichtung 80 bzw. 103 in der einen vorgegebenen Relativlage zum Chassis 43 und dem am Chassis 43 angebrachten Geräteteilen und die andere Betätigungseinrichtung 80' bzw. 103' in einer gegenüber der einen Relativlage um den Winkel von 90° verdrehten Relativlage zum Chassis 43' und den am Chassis 43' angebrachten Geräteteilen mit der Steuereinrichtung 70, 86 bzw. 70', 86' koppelbar ist.

Auf diese Weise ist mit besonders einfachen Mitteln und praktisch ohne zusätlichen Aufwand erreicht, daß ein und dasselbe Chassis samt denselben daran angebrachten Gerätenteilen zur Bildung von zwei hinsichtlich der Position des Chassis und der daran angebrachten Geräteteile in einem Gerätegehäuse unterschiedlichen Gerätevarianten in zwei um einen Winkel von 90° zueinander verdrehten Positionen in jeweils ein Gerätegehäuse eingebaut werden können und dabei die Handhaben zum Einschalten der Betriebsarten des Gerätes trotz unterschiedlicher Gerätevarianten im wesentlichen je an derselben ergonomisch vorteilhaften Position am jeweiligen Gerätegehäuse sich befinden, wobei die Handhaben je nach Gerätevariante über geringfügig unterschiedlich ausgebildete Betätigungseinrichtungen mit der Steuereinrichtung des betreffenden Gerätes über je eine Koppelungseinrichtung gekoppelt sind.

Die Erfindung ist nicht auf die vorstehend beschriebenen Ausführungsbeispiele beschränkt. Beispielsweise können die beiden Koppelungselemente der Steuereinrichtungen eines Gerätes auch um einen von 90° abweichenden Winkel zueinander winkelversetzt angeordnet sein, wenn dies zur Bildung von Gerätevarianten erforderlich ist, bei denen ein Einbau eines Chassis samt den daran angebrachten Geräteteilen in zwei um einen von 90° abweichenden Winkel zueinander versetzten Winkelpositionen in das Gerätegehäuse gewünscht ist. Auch können die Steuereinrichtungen eine andere konstruktive Ausbildung als bei den beiden vorstehend beschriebenen Gerätevarianten aufweisen; beispielsweise können die Steuereinrichtungen anstelle einer im wesentlichen kreisringsektorförmigen Ausbildung auch eine winkelförmige Ausbildung aufweisen. Auch müssen die Betätigungseinrichtungen nicht verschiebbar geführt sein, sondern können auch verschwenkbar gehalten sein. Auch können anders ausgebildete Koppelungseinrichtungen vorgesehen sein, die beispielsweise durch angelenkte Koppelungshebel oder durch Zahnsegment-Zahnstangen-Koppelungsverbindungen gebildet sein können. Die erfindungsgemäßen Maßnahmen sind nicht nur bei Aufzeichnungs- und Wiedergabegeräten zum Aufzeichnen und Wiedergeben von Signalen auf einem in einer Kassette untergebrachten Magnetband anwendbar, sondern auch bei Geräten für auf optische oder magnetische Weise abtastbare plattenförmige Aufzeichnungsträger oder auch bei anderen Geräten für andersartige Aufzeichnungsträger.

## Patentansprüche

1. Aufzeichnungs- und/oder Wiedergabegerät (1, 1') mit einem Gerätegehäuse (2, 2'), mit einem innerhalb des Gerätegehäuses (2, 2') untergebrachten Chassis (43, 43'), mit an dem Chassis (43, 43') angebrachten Geräteteilen, von denen zumindest ein Geräteteil am Chassis verstellbar gehalten ist, und mit mindestens einer zum Steuern des Verstellens von mindestens einem am Chassis (43; 43') verstellbar gehaltenen Geräteteil vorgesehenen, zwischen mindestens zwei Betriebslagen gegenüber dem Chassis (43, 43') und den daran angebrachten Geräteteilen verstellbaren Steuereinrichtung (70, 86; 70', 86'), die um eine Achse (47, 48; 47', 48') verschwenkbar gelagert ist und die über eine Koppelungseinrichtung (79, 102; 79', 102') mit einer verstellbaren Betätigungseinrichtung (80, 103; 80', 103') gekoppelt ist, die in einer Relativlage zum Chassis (43;43') und den daran angebrachten Geräteteilen über die Kopplungseinrichtung mit der Steuereinrichtung (70, 86; 70;, 86') koppelbar ist und die mit einer zumindest teilweise außerhalb des Gerätegehäuses (2, 2') befindlichen, von Hand aus betätigbaren Handhabe (17, 18; 17', 18') des Gerätes (1, 1') verbunden ist, wobei die Koppelungseinrichtung (79, 102; 79', 102') an der Steuereinrichtung (70, 86; 70', 86') und an der Betätigungseinrichtung (80, 103; 80', 103') je ein Koppelungselement aufweist, dadurch gekennzeichnet, daß die Steuereinrichtung (70, 86; 70', 86') zwei um einen bestimmten Winkel bezüglich der Achse (47, 48; 47', 48') zueinander versetzt angeordnete Koppelungselemente (81, 81', 104, 104'; 81', 81, 104', 104) aufweist und daß mit jedem Koppelungselement (81, 81', 104, 104'; 81', 81, 104', 104) der Steuereinrichtung (70, 86; 70', 86') ein Koppelungselement (83, 105; 83', 105') einer von zwei Betätigungseinrichtungen (80, 103; 80', 103') in Wirkverbindung bringbar ist, von denen eine Betätigungseinrichtung (80, 103) in der einen vorgegebenen Relativlage zum Chassis (43) und den am Chassis (43) angebrachten Geräteteilen und die andere Betätigungseinrichtung (80', 103') in einer gegenüber der einen Relativlage im wesentlichen um den bestimmten Winkel verdrehten Relativlage zum Chassis (43') und den am Chassis (43') angebrachten Geräteteilen mit der Steuereinrichtung koppelbar ist.

2. Gerät nach Anspruch 1, dadurch gekennzeichnet, daß die beiden Koppelungselemente (81, 81', 104, 104'; 81', 81, 104', 104) der Steuereinrichtung (70, 86; 70', 86') im wesentlichen um 90° bezüglich der Achse (47, 48; 47', 48') zueinander versetzt angeordnet sind (Fig. 3; 4).

3. Gerät nach Anspruch 1 oder 2, dadurch gekennzeichnet, daß die Koppelungselemente (104, 104'; 104', 104) der Steuereinrichtung (86; 86') durch Öffnungen (104, 104'; 104', 104) in der Steuereinrichtung (86; 86') gebildet sind, in die als Koppelungselemente (105; 105') der Betätigungseinrichtung (103; 103') von diesen abstehende Stifte (105, 105') einführbar sind (Fig. 3; 4).

4. Gerät nach Anspruch 1 oder 2, dadurch gekennzeichnet, daß die Koppelungselemente (81, 81'; 81', 81) der Steuereinrichtung (70; 70') durch von dieser abstehende Stifte (81, 81'; 81', 81) gebildet sind, die in als Koppelungselement (83; 83') der Betätigungseinrichtungen (80; 80') in diesen vorgesehene Öffnungen (83; 83') einführbar sind (Fig. 3; 4).

5. Gerät nach einem der vorhergehenden Ansprüche, dadurch gekennzeichnet, daß die Steuereinrichtung (70, 86; 70', 86') einen Innenbereich (71, 87; 71', 87'), mit dem die Steuereinrichtung (70, 86; 70', 86') um die Achse (47, 48; 47', 48') verschwenkbar gelagert ist, und einen mit dem Innenbereich (71, 87; 71', 86') verbundenen, im wesentlichen kreisringsektorförmigen Randbereich (72, 88; 72', 88') aufweist, der koaxial zu der Achse (47, 48; 47', 48') angeordnet ist, und daß die beiden Koppelungselemente (81, 81', 104, 104'; 81', 81, 104', 104) der Steuereinrichtung (70, 86; 70', 86') in dem kreisringsektorförmigen Randbereich (72, 88; 72', 88') vorgesehen sind (Fig. 3; 4).

6. Gerät nach einem der vorhergehenden Ansprüche, dadurch gekennzeichnet, daß bei einem Gerät (1; 1') mit einer am Chassis (43; 43') vorgesehenen Achse (47, 48; 47', 48') für einen rotierend antreibbaren Geräteteil (11, 49, 12, 50; 11', 48', 12', 50') zum Antreiben eines Aufzeichnungsträgers (26) die Steuereinrichtung (70, 86; 70', 86') um die Achse (47, 48; 47', 48') für den rotierend antreibbaren Geräteteil (11, 49, 12, 50; 11', 48', 12', 50') verschwenkbar gelagert ist (Fig. 3; 4).

## Claims

1. A recording and/or reproducing apparatus (1; 1') comprising an apparatus housing (2; 2'), a chassis (43; 43') arranged inside the apparatus housing (2; 2'), apparatus parts arranged on the chassis (43; 43') and including at least one apparatus part arranged on the chassis so as to be movable, and at least one control device (70, 86; 70', 86') provided to control the movement of least one apparatus part arranged on the chassis (43; 43') so as to be movable, which at least one control device is mounted so as to be pivotable about a spindle (47, 48; 47', 48'), is movable between at least two operating positions relative to the chassis (43; 43') and the apparatus parts arranged thereon, and is coupled to a movable actuating device (80, 103; 80', 103') *via* a coupling device (79, 102; 79', 102'), which actuating device can be coupled to the control device (70, 86; 70', 86') *via* the coupling device (79, 102; 79', 102') in a given position relative to the chassis (43; 43') and the apparatus parts arranged thereon, and which is connected to a hand-actuated actuating member (17, 18; 17', 18') of the apparatus (1; 1'), which member is disposed at least partly outside the apparatus housing (2; 2'), the coupling device (79, 102; 79', 102') comprising a coupling element on the control device (70, 86; 70', 86') and on the actuating device (80, 103; 80', 103'), characterized in that the control device (70, 86; 70', 86') comprises two coupling elements (81, 81', 104, 104'; 81', 81, 104', 104) which are spaced apart by a given angle relative to the spindle (47, 48; 47', 48'), and one of two actuating devices (80, 103; 80', 103') is engageable with each coupling element (81, 81', 104, 104'; 81', 81, 104', 104) of the control device (70, 86; 70', 86'), of which one actuating device (80, 103) can be coupled to the control device in a given position relative to the chassis (43) and the apparatus parts arranged on the chassis (43), and the other actuating device (80', 103') can be coupled to the control device in a position rotated through the given angle with respect to the given position relative to the chassis (43') and the apparatus parts arranged on the chassis (43').

2. An apparatus as claimed in Claim 1, characterized in that the two coupling elements (81, 81', 104, 104'; 81', 81, 104', 104) of the control device (70, 86; 70', 86') are spaced substantially 90° apart relative to the spindle (47, 48; 47', 48') (Figs. 3; 4).

3. An apparatus as claimed in Claim 1 or 2, characterized in that the coupling elements (104, 104'; 104', 104) of the control device (86; 86') are formed by apertures (104, 104'; 104', 104) in the control device (86;86'), which apertures are engageable by pins (105; 105') projecting from the actuating devices (103; 103') and forming the coupling elements (105; 105') of said actuating devices (Figs. 3; 4).

4. An apparatus as claimed in Claim 1 or 2, characterized in that the coupling elements (81, 81'; 81', 81) of the control device (70; 70') are formed by pins (81, 81'; 81', 81) which project from said control device and which are engageable in apertures (83; 83') provided in the actuating devices (80; 80') and forming the coupling elements (83; 83') of said actuating devices (Figs. 3; 4).

5. An apparatus as claimed in any one of the preceding Claims, characterized in that the control device (70, 86; 70', 86') has an inner portion (71, 87; 71', 87'), with which the control device (70, 86; 70', 86') is pivotable about the spindle (47, 48; 47', 48'), and a substantially sector-shaped peripheral portion (72, 88; 72', 88'), which is connected to the inner portion (71, 87; 71', 87') and which is coaxial with the spindle (47, 48; 47', 48'), and the two coupling elements (81, 81', 104, 104'; 81', 81, 104', 104) of the control device (70, 86; 70', 86') are situated at the sector-shaped peripheral portion (72, 88; 72', 88') (Figs. 3; 4).

6. An apparatus as claimed in any one of the preceding Claims, characterized in that in an apparatus (1; 1') comprising a spindle (47, 48; 47', 48') for a rotatably drivable apparatus part (11, 49, 12, 50; 11', 49', 12', 50') for driving a record carrier (26), which spindle is mounted on the chassis (43; 43'), the control device (70, 86; 70', 86') is pivotable about the spindle (47, 48; 47', 48') for the rotatably drivable apparatus part (11, 49, 12, 50; 11', 49', 12', 50') (Figs. 3; 4).

## Revendications

1. Appareil d'enregistrement et/ou de reproduction (1, 1') avec un boîtier d'appareil (2, 2'), avec un châssis (43, 43') logé à l'intérieur du boîtier d'appareil (2, 2'), avec des pièces d'appareil appliquées sur le châssis (43, 43') dont au moins une pièce d'appareil est maintenue de manière déplaçable sur le châssis et avec au moins un dispositif de commande (70, 86; 70', 86') prévu pour la commande du déplacement d'au moins une pièce d'appareil maintenue à déplacement sur le châssis (43; 43') et réglable entre au moins deux positions de fonctionnement par rapport au châssis (43, 43') et aux pièces d'appareil appliquées sur celui-ci, lequel dispositif est logé à pivotement autour d'un axe (47, 48; 47', 48') et peut être couplé par l'intermédiaire d'un dispositif d'accouplement (79, 102; 79', 102') à un dispositif d'actionnement (80, 103; 80', 103') réglable qui peut être couplé dans une position relative prédéterminée par rapport au châssis (43; 43') et aux pièces d'appareil appliquées sur celui-ci par l'intermédiaire d'un dispositif d'accouplement (79, 102; 79', 102') avec le dispositif de commande (70, 86; 70', 86') et est relié avec une manette (17, 18; 17', 18') de l'appareil (1, 1') qui peut être actionnée à la main et se trouve, du moins en partie, en dehors du boîtier d'appareil (2, 2'), le dispositif d'accouplement (79, 102; 79', 102') présentant un élément d'accouplement et sur le dispositif de commande (70, 86; 70', 86') et sur le dispositif d'actionnement (80, 103; 80', 103'), caractérisé en ce que le dispositif de commande (70, 86; 70', 86') présente deux éléments d'accouplement (81, 81'; 104, 104'; 81', 81, 104', 104) disposés dans un décalage angulaire d'un angle déterminé par rapport à l'axe (47, 48; 47', 48') et qu'à chaque élément d'accouplement (81, 81', 104, 104'; 81', 81, 104', 104) du dispositif de commande (70, 86; 70', 86') un élément d'accouplement (83, 105; 83', 105') d'un des deux dispositifs d'actionnement (80, 103; 80', 103') peut être amené dans une relation fonctionnelle par laquelle un dispositif d'actionnement (80, 103) dans l'une des positions relatives prédéterminées par rapport au châssis (43) et les pièces d'appareil appliquées sur le châssis (43) et l'autre dispositif d'actionnement (80', 103') dans une position relative par rapport au châssis (43') et aux pièces d'appareil appliquées sur le châssis (43') après une rotation d'un angle déterminé par rapport à une position relative peuvent être couplés avec le dispositif de commande.

2. Appareil selon la revendication 1, caractérisé en ce que les deux éléments d'accouplement (81, 81', 104, 104'; 81', 81, 104', 104) du dispositif de commande (70, 86; 70', 86') sont disposés essentiellement dans un décalage de 90° par rapport à l'axe (47, 48; 47', 48') l'un par rapport à l'autre (Fig. 3, 4).

3. Appareil selon l'une des revendications 1 ou 2, caractérisé en ce que les éléments d'accouplement (104, 104'; 104', 104) du dispositif de commande (86; 86') sont formés par des ouvertures (104, 104'; 104', 104) dans le dispositif de commande (86; 86') dans lequel des broches (105; 105') débordant du dispositif d'actionnement peuvent être introduites à titre d'éléments d'accouplement (105, 105') du dispositif d'actionnement (103; 103') (Fig. 3, 4).

4. Appareil selon l'une des revendications 1 ou 2, caractérisé en ce que les éléments d'accouplement (81, 81'; 81', 81) du dispositif de commande (70; 70') sont formés par des broches (81, 81'; 81', 81) débordant de celui-ci, lesquelles peuvent être introduites à titre d'éléments d'accouplement (83; 83') des dispositifs d'actionnement (80, 80') dans des ouvertures prévues dans ceux-ci (83; 83') (Fig. 3, 4).

5. Appareil selon l'une des revendications précédentes, caractérisé en ce que le dispositif de commande (70, 86; 70', 86') présente une zone interne (71, 87; 71', 87') avec laquelle le dispositif de commande (70, 86; 70', 86') est logé à pivotement autour de l'axe (47, 48; 47', 48') et une zone marginale (72, 88; 72', 88') essentiellement en forme de secteur d'anneau de cercle et reliée à la zone interne (71, 87; 71', 87'), laquelle zone est disposée coaxialement à l'axe (47, 48; 47', 48') et que les deux éléments d'accouplement (81, 81'; 104, 104', 81', 81, 104', 104) du dispositif de commande (70, 86; 70', 86') sont prévus dans la zone marginale en forme de secteur d'anneau de cercle (72, 88; 72', 88') (Fig. 3, 4).

6. Appareil selon l'une des revendications précédentes, caractérisé en ce que, pour un appareil (1, 1') avec un axe (47, 48; 47', 48') prévu sur le châssis (43; 43') pour une pièce d'appareil qui peut être entraînée à rotation (11, 49, 12, 50; 11', 49', 12', 50') en vue de l'entraînement d'un support d'enregistrement (26), le dispositif de commande (70, 86; 70', 86') est logé à pivotement autour de l'axe (47, 48; 47', 48') pour la pièce d'entraînement (11, 49, 12, 50, 11', 49', 12', 50') susceptible d'être entraînée à rotation (Fig. 3, 4).
